# EUROPEAN PATENT SPECIFICATION

(11) **EP 4 295 481 B1**
(45) Date of publication and mention of the grant of the patent: **18.11.2026**
(21) Application number: 22756969.6
(22) Date of filing: 17.02.2022
(51) Int. Cl.: H02S 20/23, E04D 13/18, F24S 20/67, H02S 20/24

(54) **ROOFING SYSTEMS, ROOFING SYSTEMS WITH INTEGRATED SOLAR RACKING SYSTEMS, ROOFING SYSTEM COMPONENTS, AND RELATED METHODS**
DACHSYSTEME, DACHSYSTEME MIT INTEGRIERTEN SOLARREGALSYSTEMEN, DACHSYSTEMKOMPONENTEN UND ZUGEHÖRIGE VERFAHREN
SYSTÈMES DE TOITURE, SYSTÈMES DE TOITURE COMPORTANT DES SYSTÈMES DE SUPPORT SOLAIRE INTÉGRÉS, ÉLÉMENTS DE SYSTÈME DE TOITURE ET PROCÉDÉS ASSOCIÉS

(30) Priority: 17.02.2021 US 202163150569 P
(43) Date of publication of application: 27.12.2023
(73) Proprietor: Infinity Rack LLC, Morrisville, NC 27560 (US)
(72) Inventor: VERNER, Christopher L., Fort Mills, SC 29708 (US)
(74) Representative: Marks & Clerk LLP
(86) International application number: PCT/US2022/016881
(87) International publication number: WO 2022/178189

(56) References cited:
- DE-U1- 20 204 572
- DE-U1- 202013 004 982
- DE-U1- 9 407 701
- ES-A1- 2 362 918
- GB-A- 2 304 365
- JP-A- 2016 017 315
- US-A1- 2001 017 011
- US-A1- 2010 237 028
- US-A1- 2011 094 569
- US-A1- 2013 139 468
- US-A1- 2014 366 464
- US-A1- 2020 385 993

## Description

### RELATED APPLICATIONS

The presently disclosed subject matter claims the benefit of U.S. Provisional Patent Application Serial No. 63/150,569, filed February 17, 2021.

### TECHNICAL FIELD

The present subject matter relates to roofing systems, roofing systems with integrated solar racking systems, roofing systems components, and related methods. In particular, the present subject matter relates to roofing systems that can provide for integration of solar panels or use of insulated roofing panels for non-solar applications to form a roofing system for a building or other structure.

### BACKGROUND

There has been an increasing demand of utilizing solar energy as a clean alternative for individual homes. Solar modules are of particular interest and are widely utilized and installed in a solar rack that resides on top of the existing roof of a house or other building. Generally, each of the solar modules can be arranged in an array and held between vertical rails in a racking system secured onto an existing roof. These solar racking system installations are typically not watertight as racks are affixed upon an existing roof. In these racking systems, rainwater leakage can become a problem. The rainwater seeps down through joints between the frame of the solar module and the vertical rail of the racking system and onto the roof. Such leakage as well as other issues encountered when mounting the racking system on the roof make such racking system installations less desirable, even when weighed against the benefits of solar power.

While there are existing racking structures that offer "watertight" solutions, they are less durable, more expensive to produce and construct, and much more complicated to install and assemble. For example, certain leading alternatives rely on wooden rafters or girders which can lead to rot and degradation of the structural integrity of the roof below the racking system. Racking systems are complicated and contain a multitude of parts which makes assembly complicated and makes user error more likely during installation. Existing watertight solutions rely on exposed commercial/roofing seam tape or ethylene propylene diene monomer rubber (EPDM) gaskets that are exposed to the sun and other elements which results in degradation over time and a typical maximum lifespan of around three (3) years before replacement is needed. Racking structures that do not rely on the seam tape or EPDM gaskets to create a watertight seal have purlin caps that protrude from between the solar panels or insulated metal plates that create water dams which cause water to pool leading to mold and waste buildups that can degrade and break the watertight seal over time and obstruct the energy collection of the solar panels.

To combat such issues that arise with solar module array installations that are secured to existing roofs, the construction industry stands to gain by integrating solar modules into roof assemblies in new construction or when replacing a roof on an existing structure. For such solar roof assembly installation, though, there are few options available for a fully integrated roofing system that include the structural member required and there are no options that offer reliable, lasting, watertight protection.

As such, in general construction and solar installation, a need exists to create an easy to assemble, long lasting, watertight roof assembly that reduces the number of steps required, reduces labor costs, and simplifies the process of both general roof construction as well as solar integration within a roof that can be used on structures of all types.

Document JP 2016 017315 A discloses an existing roofing system.

### SUMMARY

The present invention provides a roofing system according to claims 1 to 15. In particular, the present subject matter relates to roofing systems that support the integration of solar panels into the roofing structure and/or support the use of insulated roofing panels for non-solar applications to form a roofing system for a building, structure, or canopy. Methods related to the manufacture and assembly of the roofing systems disclosed herein are also provided, but do not form part of the claimed invention.

Thus, it is an object of the presently disclosed subject matter to provide roofing systems that support the integration of solar panels or insulated roofing panels for non-solar applications into the roof to form a roofing system for a building, structure, or canopy. While one or more objects of the presently disclosed subject matter having been stated hereinabove, and which is achieved in whole or in part by the presently disclosed subject matter, other objects will become evident as the description proceeds when taken in connection with the accompanying drawings as best described hereinbelow.

### BRIEF DESCRIPTION OF THE DRAWINGS

A full and enabling disclosure of the present subject matter including the best mode thereof to one of ordinary skill in the art is set forth more particularly in the remainder of the specification, including reference to the accompanying figures, in which:
Figure 1A illustrates a perspective view of a structure with an embodiment of a roofing system that includes embodiments of solar panels as an outer surface of the roof according to the present subject matter;
Figure 1B illustrates a cross-sectional view of another embodiment of a roofing system that includes embodiments of solar panels or insulated roofing panels that can form an outer surface of the roof according to the present subject matter;
Figure 2A illustrates a perspective view of an example embodiment of a base building structure on which an embodiment of a roofing system according to the present subject matter can be installed;
Figure 2B illustrates a perspective view of the base building structure according to Figure 2A with embodiments of brackets of a roofing system according to the present subject matter being installed;
Figures 3A-3D illustrate perspective views of portions of the base building structure according to Figure 2A with embodiments of support beams of a roofing system according to the present subject matter being secured to the base building structure by the brackets shown in Figure 2B;
Figure 4A illustrates a perspective view showing a portion of the base building structure according to Figure 2A with embodiments of wire troughs installed on the support beams of the roofing system according to the present subject matter;
Figures 4B and 4C illustrate perspective views of portions of the base building structure according to Figure 2A showing installation of wires into wire troughs shown in Figure 4A according to the present subject matter;
Figure 5A illustrates a longitudinal side plan view of an embodiment of a gasket used in conjunction with insulated roofing panels or solar panels of the roofing system according to the present subject matter;
Figure 5B illustrates an end side plan view of an embodiment of the gasket as shown in Figure 5A used in conjunction with roofing panels or solar panels of the roofing system according to the present subject matter;
Figures 6A, 6B, and 6C illustrate perspective views of portions of the base building structure according to Figure 2A showing installation of gaskets on the support beams of the roofing system according to the present subject matter;
Figures 7A, 7B, and 7C illustrate perspective views of portions of the base building structure according to Figure 2A showing installation of solar panels/roofing panels on the support beams of the roofing system according to the present subject matter;
Figures 8A and 8B illustrate perspective views of portions of the base building structure according to Figure 2A showing installation of top caps over the solar panels/roofing panels and secured on the support beams of the roofing system according to the present subject matter;
Figures 9A and 9B illustrate perspective views of portions of the base building structure according to Figure 2A showing installation of top caps over the solar panels/roofing panels and secured on the support beams of the roofing system according to the present subject matter;
Figure 10A illustrates a cross-sectional view of another embodiment of a support beam of a roofing system that includes embodiments of gaskets, end fins, a wire trough and a top cap according to the present subject matter;
Figure 10B illustrates a cross-sectional view of another embodiment of a support beam of a roofing system that includes embodiments of a wire trough and a top cap according to the present subject matter;
Figures 11A and 11B illustrate cross-sectional views of portions of an embodiment of the roofing system according to present subject matter showing the solar modules secured between the gaskets of the roofing system;
Figures 12A and 12B illustrate perspective views of the base building structure according to Figure 2A with an embodiment of the roofing system that includes embodiments of solar modules as an outer surface of the roof according to the present subject matter;
Figure 13A illustrates a cross-sectional view of a portion of an embodiment of the roofing system according to present subject matter showing the solar modules laid side-by-side with a seal secured between the solar modules;
Figure 13B illustrates a cross-sectional view of a portion of an embodiment of the roofing system according to present subject matter showing the solar modules laid side-by-side as shown in Figure 13A and secured between the gaskets of the roofing system; and
Figure 13C illustrates an end side plan view of an embodiment of the gaskets as shown in Figure 13B used in conjunction with roofing panels or solar panels of the roofing system according to the present subject matter.

Repeat use of reference characters in the present specification and drawings is intended to represent the same or analogous features or elements of the present subject matter.

### DETAILED DESCRIPTION

Reference now will be made to the embodiments of the present subject matter, one or more examples of which are set forth below. Each example is provided by way of an explanation of the present subject matter, not as a limitation. In fact, it will be apparent to those skilled in the art that various modifications and variations can be made in the present subject matter without departing from the scope or spirit of the present subject matter. For instance, features illustrated or described as one embodiment can be used on another embodiment to yield still a further embodiment. Thus, it is intended that the present subject matter cover such modifications and variations as come within the scope of the appended claims and their equivalents. It is to be understood by one of ordinary skill in the art that the present discussion is a description of exemplary embodiments only, and is not intended as limiting the broader aspects of the present subject matter, which broader aspects are embodied in exemplary constructions.

Although the terms first, second, right, left, front, back, etc. may be used herein to describe various features, elements, components, regions, layers and/or sections, these features, elements, components, regions, layers and/or sections should not be limited by these terms. These terms are only used to distinguish one feature, element, component, region, layer or section from another feature, element, component, region, layer or section. Thus, a first feature, element, component, region, layer or section discussed below could be termed a second feature, element, component, region, layer or section without departing from the teachings of the disclosure herein.

Similarly, when a component, layer or coating is being described in the present disclosure as "on" or "over" another component, layer or substrate, it is to be understood that the components or layers can either be directly contacting each other or have another component, layer or feature between the components or layers, unless expressly stated to the contrary. Thus, these terms are simply describing the relative position of the components or layers to each other and do not necessarily mean "on top of" since the relative position above or below depends upon the orientation of the device to the viewer.

Embodiments of the subject matter of the disclosure are described herein with reference to schematic illustrations of embodiments that may be idealized. As such, variations from the shapes and/or positions of features, elements or components within the illustrations as a result of, for example but not limited to, user preferences, manufacturing techniques and/or tolerances are expected. Shapes, sizes and/or positions of features, elements or components illustrated in the figures may also be magnified, minimized, exaggerated, shifted or simplified to facilitate explanation of the subject matter disclosed herein. Thus, the features, elements or components illustrated in the figures are schematic in nature and their shapes and/or positions are not intended to illustrate the precise configuration of the subject matter and are not intended to limit the scope of the subject matter disclosed herein.

It is to be understood that the ranges and limits mentioned herein include all ranges located within the prescribed limits (i.e., subranges). For instance, a range from about 100 to about 200 also includes ranges from 110 to 150, 170 to 190, 153 to 162, and 145.3 to 149.6. Further, a limit of up to about 7 also includes a limit of up to about 5, up to 3, and up to about 4.5, as well as ranges within the limit, such as from about 1 to about 5, and from about 3.2 to about 6.5 as examples.

As used herein, the term "solar modules" and "solar panels" are generally used interchangeably and refer to a single photovoltaic panel that is an assembly of connected solar cells. The solar cells absorb sunlight as a source of energy to generate electricity. An array of solar modules can be used to collect and supply power to a variety of structures and/or apparatuses.

As used herein, the term "roofing panels" is used broadly to mean any type of roofing panel and can include, but is not limited to solar modules, or solar panels, insulated roofing panels that do not include solar cells, or other roofing panels.

As used herein, the term a "plurality" means two or more.

The present disclosure relates to a roofing system for forming a roof of a structure that includes solar modules and/or insulated roofing panels, i.e., weatherproof roofing panel, which in some embodiments can be insulated metal plates, that form the majority of the outer surface of the roof. The roofing system comprises one or more structural beams that can be secured to the structure being roofed that act as support beams to provide support to the roof. Each of the one or more structural beams comprises an extruded aluminum structural beam. Roofing panels are provided that comprise at least one of the insulated roofing panels or the solar modules respectively. The roofing system comprises one or more top caps corresponding to the number of the structural beams. The one or more top caps are configured to secure the roofing panels in place on the one or more structural beams. To protect, secure and seal the roofing panels in position relative to the structural beams and the top caps, gaskets are provided for sealing the roofing panels. The roofing system additionally comprises end fins attachable to at least one of the structural beams or the top caps to enclose end edges of the roofing system. Further, the roofing system includes one or more interior gutters built into each of the structural beams to drain any water that may leak through between the gaskets and the roofing panels.

In some embodiments where solar modules are used as roofing panels, the roofing system can comprise wire troughs configured to accommodate wiring for solar modules used as roofing panels. Each of the wire troughs can be attached to a side of a structural beam. Additionally, in such embodiments, the one or more structural beams can further comprise a bonding rail. The bonding rail, or bonding jumper rail, can be used for clipping standard UL listed bonding jumpers between a solar module and a beam. Additionally, in some embodiments, the bonding rail can also be used to clip optimizers/ microinverters in the same way these devices clip to a solar module frame.

In some embodiments, the structural beams can comprise one or more T-bolt slots therein. The T-bolt slots, for example, can be used for attaching wire troughs and attaching insulation covers and other accessory attachment as well as for securing bolts to the respective structural beam for securement of structural attachment brackets for securing the respective structural beam to a building structure being roofed. Each of the structural beams can also comprise a threaded channel on a top portion of the respective structural beam for securing a top cap to the respective structural beam.

The roofing system disclosed herein is not only novel to the solar industry, it is also novel to the general construction industry as well. The roofing system allows for a less expensive and more durable alternative for the general construction industry for new buildings, modular or prefab homes, and kit construction, such as for homes and outbuildings. The roofing system disclosed herein can be considered "kit-like" in that it can come partially pre-assembled and can include easy to assemble components. It can also increase the accessibility of building integrated photovoltaics ("BIPV") for a number of building types, reducing both a cost and complication barrier to installation.

In roofing and general construction, the use of the structural beams of the roofing system disclosed herein can allow for large unsupported spans while creating a roofing system with a far superior lifespan compared to traditional roofing methods. The weatherproof roofing panels, which can comprise insulated metal plates, can be sandwiched into the beam system between the structural beams and the top caps. As stated above, this beam system can incorporate an internal backup gutter system to facilitate the removal of moisture from the roofing system. Thus, whether or not solar photovoltaic solar modules are integrated therein, the roofing system disclosed herein will create a durable, sound roofing structure for a variety of structure types.

Thus, the present disclosure provides a roofing system that uses structural beams and top caps that can secure and hold multiple types of solar modules and insulated weatherproof roofing panels in a watertight, shingle-like assembly using roofing panel gaskets in a racking system, thereby providing a racking system that is integrated into the roofing structure of a building. The entire roofing system is designed to meet the typical structural requirements of a roof and/or solar array with a unique design, as explained further below with reference to the figures, that provides an all-in-one solution with long-term structural and watertight fortitude.

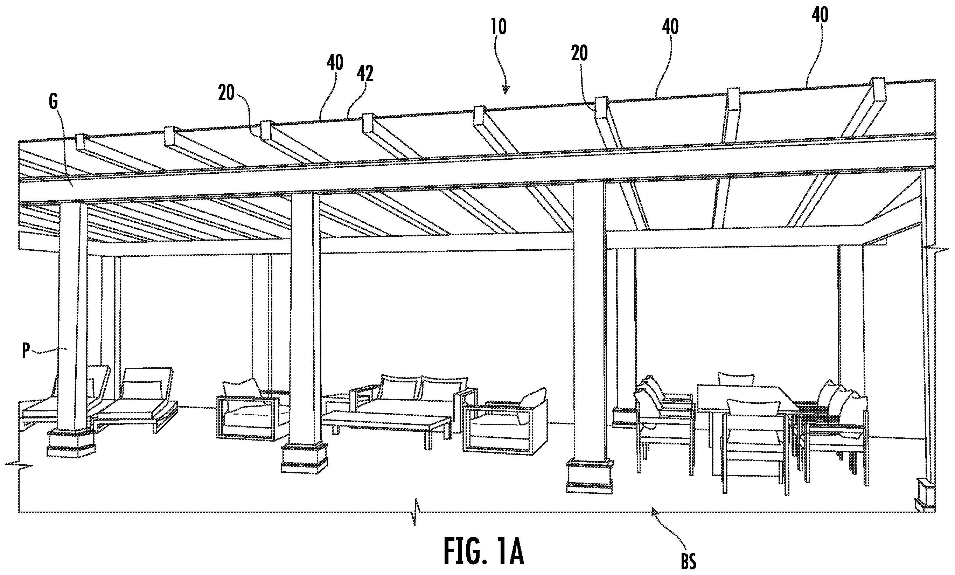

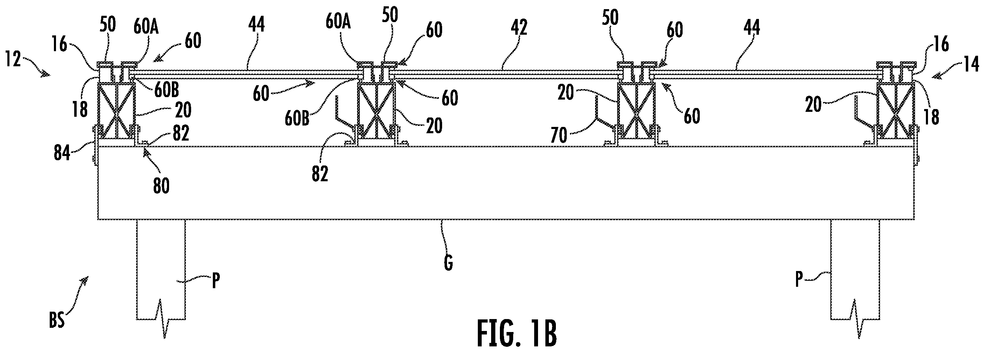

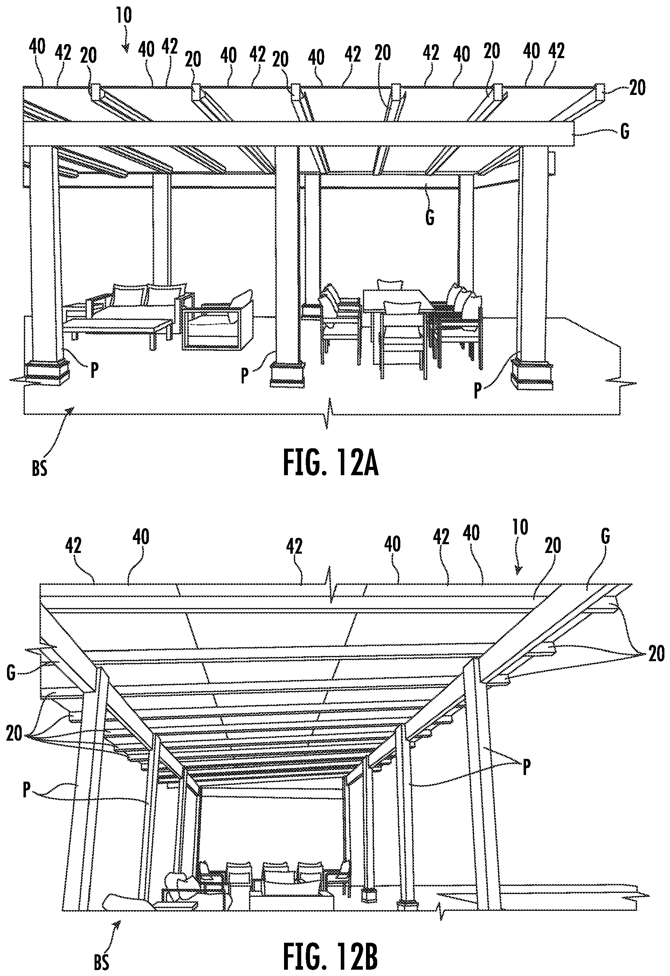

A building structure, generally, **BS,** is provided as shown in Figures 1A, 1B, 12A and 12B that includes a roofing system, generally designated **10,** that can incorporate roofing panels that can be either solar modules or insulated roofing panels. Thus, a roofing system **10** can be provided that operate as a regular roofing structure or a roofing structure that operates as both a roof and an integrated solar rack. The building structure **BS** is used herein simply for illustrative purposes only. It is noted that the roofing system **10** can be used on any type of building and an array of roofing styles.

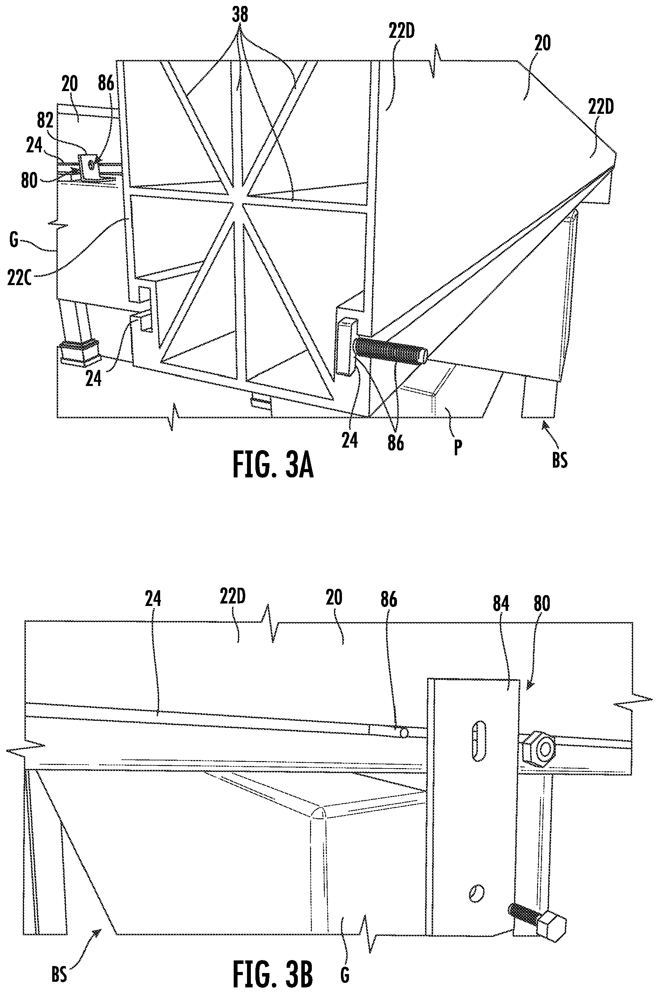

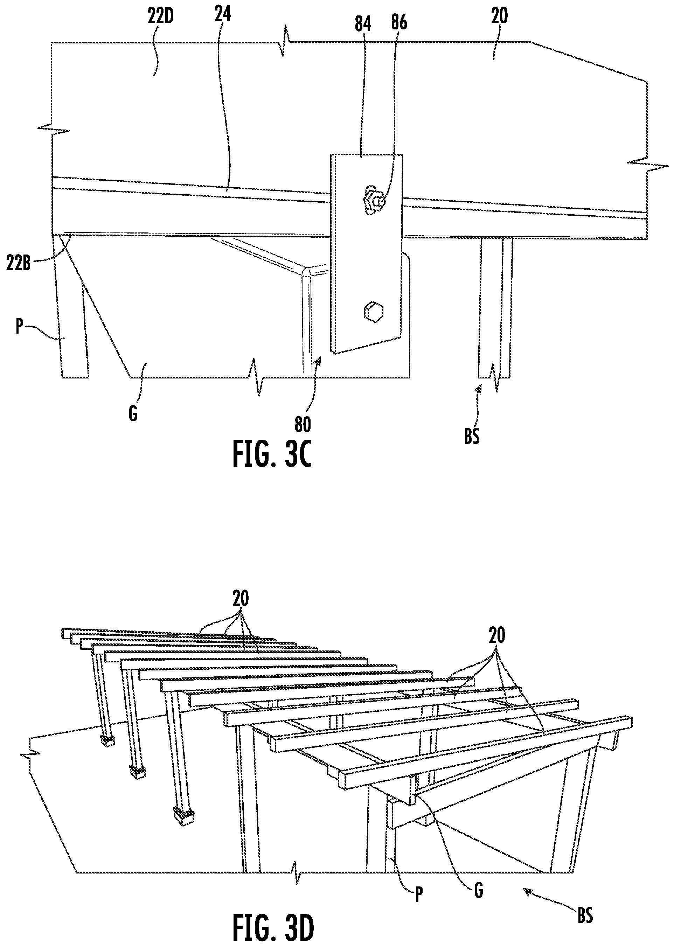

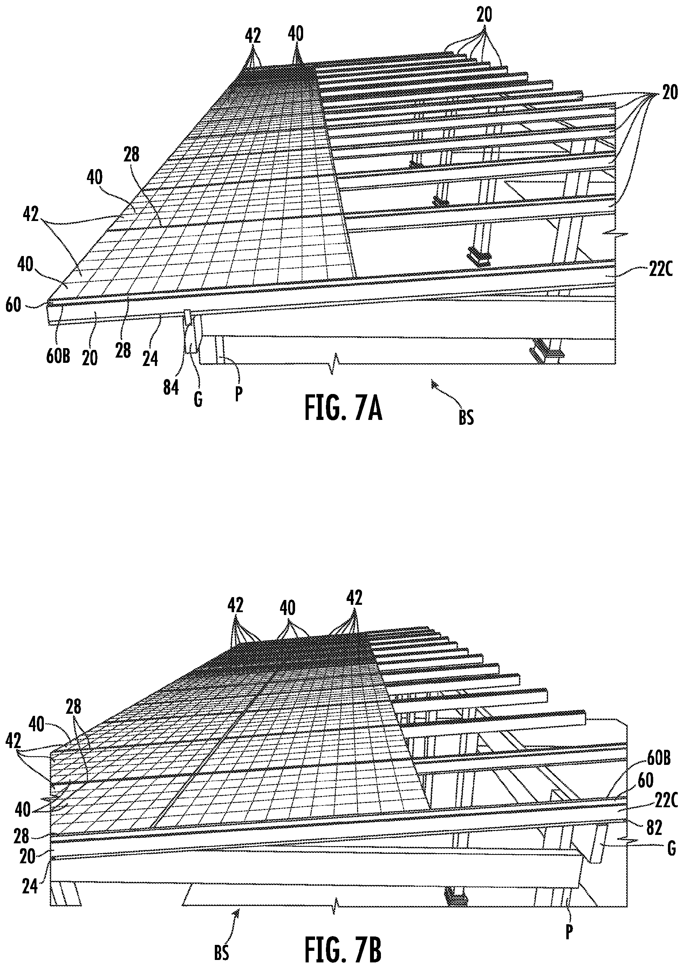

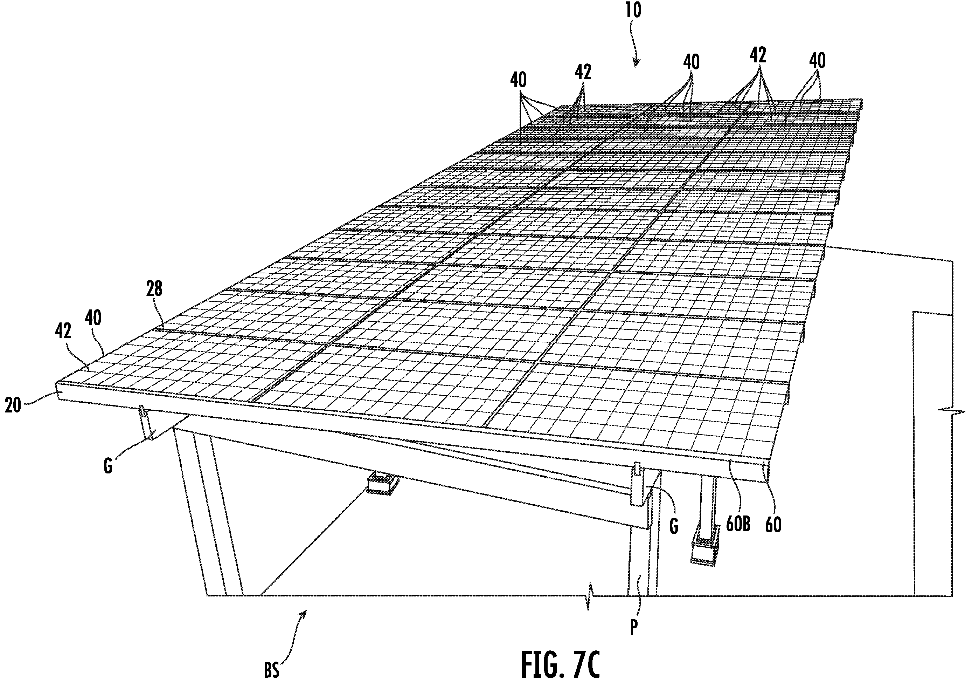

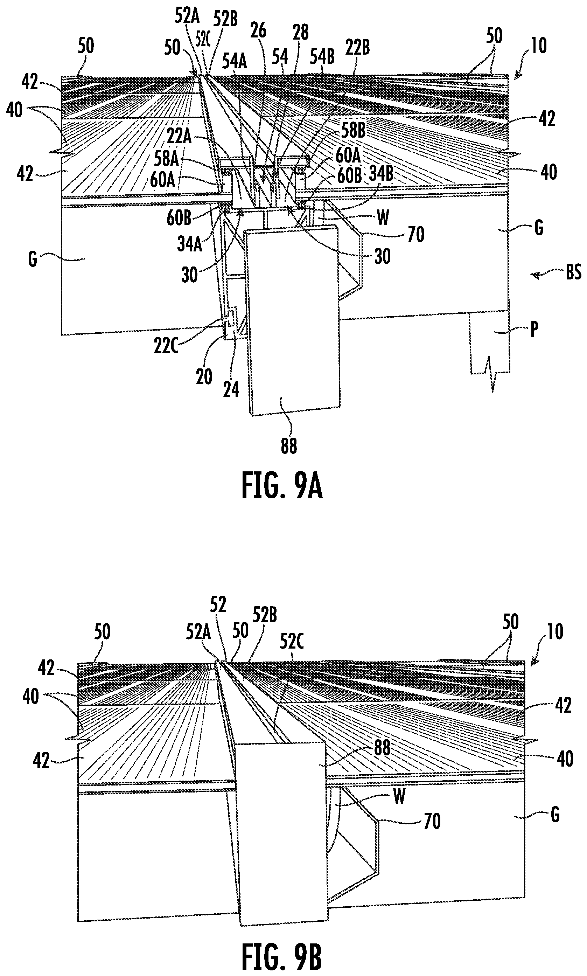

Referring to Figures 1A-12B, the roofing system **10** is provided that can comprise multiple components, including structural beams **20** and roofing panels **40** that can be manufactured in a variety of sizes to support a range of spans. The roofing system **10** incorporates top caps **50** and gaskets **60** such that the structural beams **20** receives the top caps **50** with the gaskets **60** securing and holding the roofing panels **40** between the structural beams **20** and the top caps **50**. The roofing system **10** with the structural beams **20,** the top caps **50,** and the gaskets **60** can be used to support roofing panels **40** that can be either solar panels, i.e., solar modules, **42** or insulated roofing panels, i.e., weatherproof roofing panels, **44** to create a completely watertight structure.

When the roofing system **10** is used as only a roofing structure, the insulated panels **44** (as shown in Figure 1B) can be sandwiched between the rubber gaskets **60** positioned on the top caps **50** and the beams **20.** The structural beams **20** can act as rafters and the insulated roof panels **44** act as sheathing and roofing material. Each of the structural beams **20** can include an interior gutter **30** that captures any moisture that may get past the gaskets **60** serving as a safety net for the watertight seal. That water would then run through an inside gutter channel **30** within the respective structural beam **20** and come out the end outside of the underlying structure maintaining its watertight seal.

When used to create a solar integrated roofing structure, the solar modules **42** can be similarly sandwiched between the rubber gaskets **60** positioned on the top caps **50** and the beams **20**. Stepped gaskets **60** can be used to allow the solar modules **42** to slightly overlap like a shingle would. A sealant can be used between the solar modules. For example, a double-sided butyl tape can be placed in between the overlap to seal the overlapping solar modules **42** to along the overlap. Unlike conventional solar racking structures commonly used, this tape is not exposed to the elements and therefore does not have a limited lifespan. The same or similar sealants can be used between insulated roofing panels **44.** The solar modules **42** can then be bonded to the bonding rail on the beam using a bonding jumper to create an obvious visible bond between the solar modules **42** and the respective structural beam **20.** This bonding is required in a solar installation due to the electrical components. A wire trough **70** can be slid into the respective structural beam **20** for wire management and/or micro-inverter/optimizer mounting to hide and protect wiring in between the solar modules **42.** This application contains the same gutter structure **30** as the roofing structure using insulated roofing panels applications.

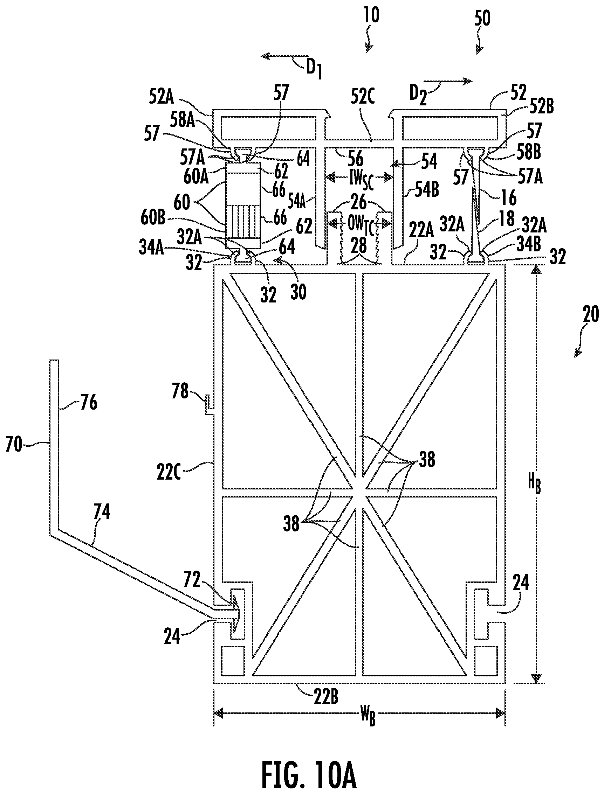

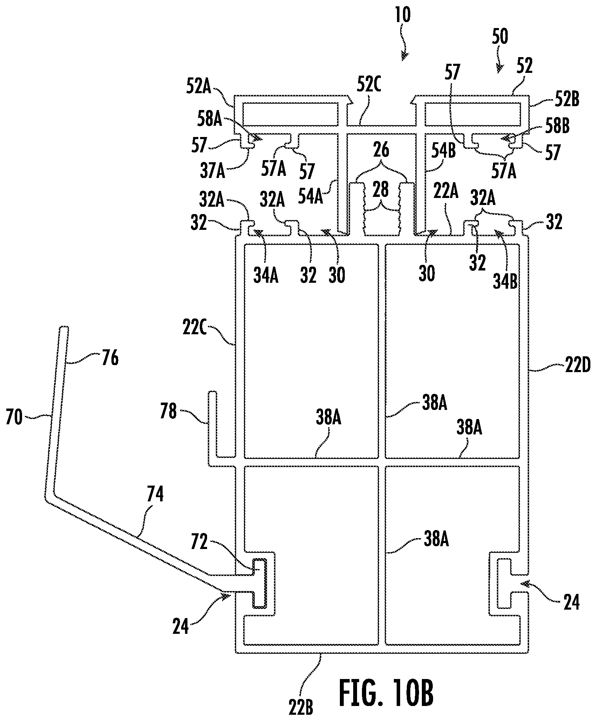

An exemplary embodiment of the roofing system **10** as shown in Figures 1A, 1B, and 3A-12B will now be described in more detail. The roofing system **10** can comprise two or more, or a plurality of, structural beams **20** with each of the structural beams **20** comprising an extruded structural beam. The structural beams **20** can comprise a metal. For example, the structural beams **20** can comprise extruded aluminum. As shown in Figure 10, each structural beam **20** can comprise a top wall **22A** and a bottom wall **22B** and two opposing side walls **22C, 22D.** The structural beam **20** can comes in various dimensions depending on the building structure with which it will be used. For example, for standard solar mounting applications with maximum span of about 6 ft., the cross-sectional dimensions of the beam **20** can be about 3.5 inches in width **W_{B}** by about 3 inches in height **H_{B}**. For spans up to about 12 ft., the cross-sectional dimensions of the beam **20** can be about 3.5 inches in width **W_{B}** by about 6 inches in height **H_{B}**. For spans up to about 16 ft., the cross-sectional dimensions of the beam **20** can be about 3.5 inches in width **W_{B}** by about 8 inches in height **H_{B}**. For spans up to about 18 ft., the cross-sectional dimensions of the beam **20** can be about 3.5 inches in width **W_{B}** by about 10 inches in height **H_{B}**. The thickness of the top wall **22A,** the bottom wall **22B,** and two opposing side walls **22C, 22D** may vary as well, depending on the length of the span of the structural beam **20.** Additionally, the structural beam **20** can include reinforcement support tabs **38, 38A** within an interior of the structural beam **20** that can be provided at different angles to provide increased structural integrity and support to the structural beam **20** to help withstand the different types of stresses and forces placed on the beams **20.** For example, as shown in Figure 10A, the support tabs **38** within the interior of the structural beam **20** can include support tabs **38** that run at acute angles to the walls **22A, 22B, 22C** and **22D** of the structural beam **20** as well as support tabs **38** that are about perpendicular, or normal, to the respective walls **22A, 22B, 22C** and **22D** of the structural beam **20** from which they extend to provide increased structural integrity and support to the structural beam **20** . In some embodiments, as shown in Figure 10B, the support tabs **38A** within the interior of the structural beam **20** may include only support tabs **38** that are about perpendicular, or normal, to the respective walls **22A, 22B, 22C** and **22D** of the structural beam **20** from which they extend to provide increased structural integrity and support to the structural beam **20.**

T-bolt slots **24** can be formed in at least one of the side walls **22C, 22D** of each extruded beam **20** of receiving accessory attachments. For example, the T-bolt slots **24** can be used for attaching a wire trough **70** and/or for inserting bolts **82** into the respective structural beam **20** for attachment of structural attachment brackets **80** for securing the respective structural beam to a building structure **BS** being roofed. In some embodiments, brackets having a T-shaped engagement can be slid into the T-bolt slots **24** for securing the respective structural beam to a building structure **BS** being roofed. The T-bolt slots **24** in each of the structural beams **20** can be formed in the respective structural beam **20** during extrusion of the respective structural beam **20.**

Additionally, the T-bolt slot channels **24** positioned proximate to the bottom **22B** of the structural beams **20** can be used to install a bottom cap (not shown). This makes it easy to insulate the spaces between the structural beams **20** for a higher R-Value when used in general construction or building integrated photo-voltaics ("BIPV") applications and it is enclosed with a covering.

Each structural beam **20** can also comprise channel walls **26** that can extend upward from the top wall **22A** of the extruded beam **20.** The channel walls **26** can form a threaded channel **28** for securing a respective top cap **50** to the respective structural beam **20.** The threaded channel **28** on the top portion, i.e., the top wall **22A** of the respective structural beam **20** can be formed as an integral part of the respective structural beam **20** during the extrusion process.

Additionally, as shown in Figures 10A and 10B, each structural beam **20** can comprise gasket channel walls **32** extending upward from the top wall **22A** of the extruded beam **20.** The gasket channel walls **32** form one or more gasket attachment channels **34A, 34B** for securing gaskets **60** to the extruded beam **20.** Thereby, each structural beam **20** can be used to secure a bottom gasket **60B** of the gaskets **60** such that the bottom gasket **60B** can form a seal between the roofing panels **40** and the respective structural beam **20** when the components are installed in the roofing system **10.** As in the embodiment shown in Figures 10A and 10B, the structural beam **20** can have a first gasket attachment channel **34A** on a first side of the top wall **22A** of the structural beam **20** and a second gasket attachment channel **34B** on a second side of the top wall **22A** of the structural beam **20** to accommodate bottom gaskets **60B** for securement of roofing panels **40** on either side of the structural beam **20.** Depending on where the structural beam **20** is used in the roofing system **10,** for example, if the structural beam **20** is a beam that forms an end edge of the roofing system **10,** the gasket attachment channel **34A, 34B** that forms the outer gasket attachment channel can be used for securing one of the end fins **18** to the respective structural beam **20.** Each of the gasket attachment channels **34A, 34B** of the respective structural beam **20** can be formed as an integral part of the respective structural beam **20** during the extrusion process. As shown in Figures 10A and 10B, the gasket channel walls **32** can have lips **32A** that extend farther inward into the channel than the base of the gasket channel walls **32** such that the base of the respective gasket attachment channel **34A, 34B** is wider than its entrance. This configuration of the gasket attachment channels **34A, 34B** create a holding mechanism for securing bottom gaskets **60B** or end fins **18** to the structural beam **20** with an easy-to-use sliding engagement.

Each structural beam **20** can also comprise one or more interior gutters **30** built into the structural beam **20** to drain any water that may leak between the gaskets **60** and the roofing panels **40** of the roofing system **10.** In particular, the interior gutters **30** can be formed along the top wall **22A** of the extruded beam **20.** In some embodiments, for example, two interior gutters **30** can be formed on either side of the threaded channel **28** between channel walls **26** that form the threaded channel **28** extending upward from the top wall **22A** and gasket channel walls **32** that form one or more gasket attachment channels **34A, 34B** also extending upward from the top wall **22A.** The channel walls **26** of the thread channel **28** and the channel walls **32** of the gasket attachment channels **34A, 34B** on structural beam **20** with either a gasket **60** or an end fin **12** therein can thereby forms side walls of the one or more interior gutters **30.**

As disclosed above for embodiments of the roofing system **10** that are a solar integrated roofing structure, the roofing system **10** can also comprise wire troughs **70** configured to accommodate wiring for solar modules **42** used as roofing panels. Each wire trough, or wire trough attachment, **70** can be attached to a side wall **22C, 22D** of the structural beam **20.** As explained above, in some embodiments, a wire trough attachment **70** can be configured to engage a T-bolt slot **24** in a side wall **22C, 22D** of structural beam **20.** The wire trough **70** is configured to accommodate wiring for solar modules **42** used as roofing panels **40** in conjunction with the structural beam **20** to form the roofing system **10.** For example, referring to Figures 10A and 10B, the wire trough **70** can be slid into a T-bolt slot **24** formed in the structural beam **20.** In such embodiments, each wire trough **70** can include a T-shaped base **72** that is configured to fit into one of the T-bolt slots **34** formed in a side wall **22C, 22D** of the structural beam **20** to firmly hold the respective wire trough **70** in place on the structural beam **20.** Each wire trough **70** can also comprise a trough body **74** that extends out from the T-shaped base **72.** In some embodiments, the body **74** of the wire trough **70** can form the cavity of the trough between a wall **76** of the body **74** of the wire trough **70** and the side wall **22C, 22D** of structural beam **20** to which the wire trough **70** is secured.

Each structural beam **20** can also comprise a bonding rail **78** as shown in Figures 10A and 10B, for example. The bonding rail **78** can extend outward from one of the side walls **22C, 22D** of the extruded beam **20** above a T-bolt slot **24** in a side wall **22C, 22D** of structural beam **20.** In some embodiments, the bonding rail **78** can be formed as an integral part of the extruded beam **20** during the extrusion process. For example, the bonding rail **78** can be on a side of a side wall **22C, 22D** of structural beam **20** to which the wire trough **70** is attached. In this manner, a standard UL listed bonding jumper can be attached or clipped to the bonding rail **78** between solar module **42** and structural beam **20.** Similarly, optimizers and/or microinverters can be attached or clipped to the bonding rail **78** in same way with the wire trough **70** hiding the wiring and microinverters and/or optimizers.

The roofing system **10** can comprise roofing panels **40** as shown in Figures 1B and 7A-9B. The roofing panels **40** can comprise at least one of insulated roofing panels **44** or solar modules **42.** When the roofing panels **40** comprise solar modules **42,** the structural beams **20,** the top caps **50** and the gaskets **60** form an integrated solar racking system that forms a roof of a structure.

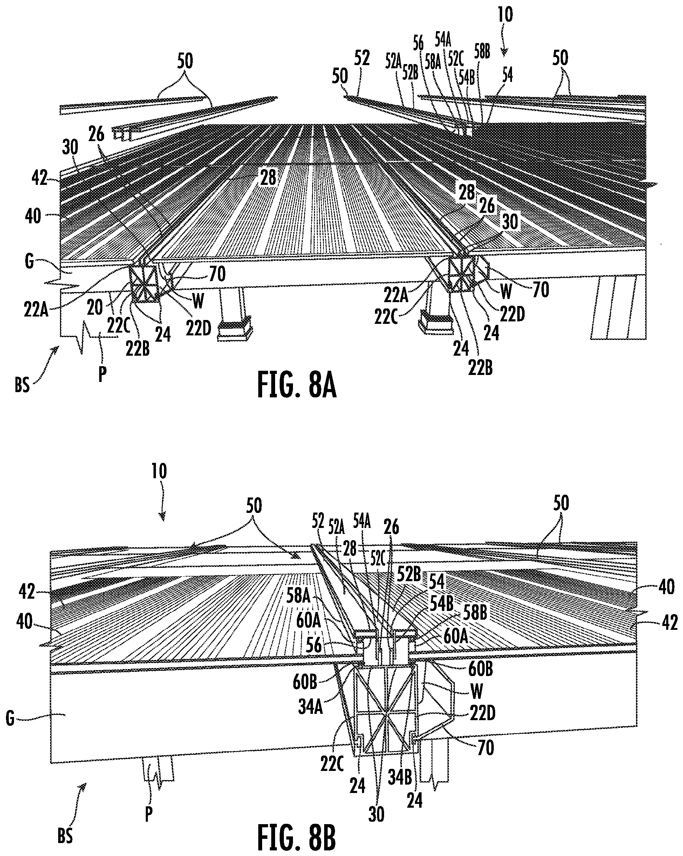

The roofing system **10** can also comprise top caps **50** corresponding to the number of the one or more structural beams as shown in Figures 8A-10. The top caps **50** can comprise a metal. For example, the top caps **50** can comprise extruded aluminum. The top caps **50** can be configured to secure the roofing panels **40** in place on the structural beams **20.** The top caps **50** can have one or more gasket attachment channels **58A, 58B** for securing top gaskets **60A** of the gaskets **60** for forming a seal between the roofing panels **40** and the respective top cap **50.**

In some embodiments, each top cap **50** can comprise a top portion **52** that includes a first flange **52A** extending in a first direction **D₁** and a second flange **52B** extending in an opposing second direction **D₂** with a securement indention **52C** between the first and second flange **52A, 52B** for receiving a fastener therein to engage the threaded channel **28** of the structural beam **20.** Each top cap **50** can comprise a securement positioning channel **54** that extends from a bottom portion **56** of the top cap **50.**

The securement positioning channel **54** can align with the securement indention **52C** between the first and second flanges **52A, 52B** and can have securement channel walls **54A, 54B** that extend from the bottom portion **56** of the top cap **50** to form the securement positioning channel **54.** In some embodiments, the securement channel walls **54A, 54B** can be separated by a distance such that the securement positioning channel **54** has an inner width **IW_{SC}** as measured from the inner surfaces of the securement channel walls **54A, 54B** that is slight wider than the outer width **OW_{TC}** of the threaded channel **28** as measured from the outer surfaces of the channel walls **26** of the threaded channel **28.** Thus, when the top cap **50** is placed on the structural beam **20** to be secured thereto, the securement positioning channel **54** of the top cap **50** is placed over the threaded channel **28** of the structural beam **20** such that channel walls **26** of the thread channel **28** fit within the securement channel walls **54A, 54B** to align the securement indention **52C** with the thread channel **28** for inserting one or more fasteners through pre-drilled holes (not shown) in the securement indention **52C** and into the thread channel **28.** Additionally, the fitting of the securement channel walls **54A, 54B** of the securement positioning channel **54** of the top cap **50** over the channel walls **26** of the thread channel **28** of the structural beam **20** can also align the gasket attachment channels **58A, 58B** for securing top gaskets **60A** of the gaskets **60** to the top cap **50** with the gasket attachment channels **34A, 34B** of the structural beam **20** for securing bottom gaskets **60B** of the gaskets **60** to the structural beam **20.** This alignment of the top gasket attachment channels **58A, 58B** with bottom gasket attachment channels **34A, 34B** of the structural beam **20** ensure proper securement and sealing of the roofing panels **40** and the roofing system **10** that forms a roofing structure for a building structure **BS.**

To form the top gasket attachment channels **58A, 58B,** each top cap **50** can comprise top gasket channel walls **57** extending downward from the bottom portion **56** of the top cap **50.** The top gasket channel walls **57** can be positioned on the first and second flange **52A, 52B** of the top cap **50** forming top gasket attachment channels **58A, 58B** on both sides of the top cap **50** to align with the gasket attachment channels **34A, 34B** of the structural beam **20** when the top cap **50** is secured thereto. In particular, as in the embodiments shown in Figures 10A and 10B, the top cap **50** can have a first top gasket attachment channel **58A** on the first flange **52A** of the structural beam **20** and a second top gasket attachment channel **58B** on the second flange **52B** of the top cap **50** to accommodate top gaskets **60A** for securement of roofing panels **40** on either side of the top cap **50.** Depending on where the top cap **50** is used in the roofing system **10,** for example, if the top cap **50** is a beam that forms an end edge of the roofing system **10,** the outer top gasket attachment channel **58A, 58B** can be used for securing the end fin **16** to the respective top cap **50.** Each of the top gasket attachment channels **58A, 58B** of the respective top cap **50** can be formed as an integral part of the respective top cap **50** during the extrusion process. As shown in Figures 10A and 10B, the top gasket channel walls **57** can have lips **57A** that extend farther inward into the channel than the base of the top gasket channel walls **57** such that the base of the respective top gasket attachment channel **58A, 58B** is wider than an entrance of the respective top gasket attachment channel **58A, 58B**. As with the gasket channels of the structural beam **20,** these configurations of the top gasket attachment channels **58A, 58B** create a holding mechanism for securing top gaskets **60A** or end fins **16** to the top cap **50** with an easy-to-use sliding engagement.

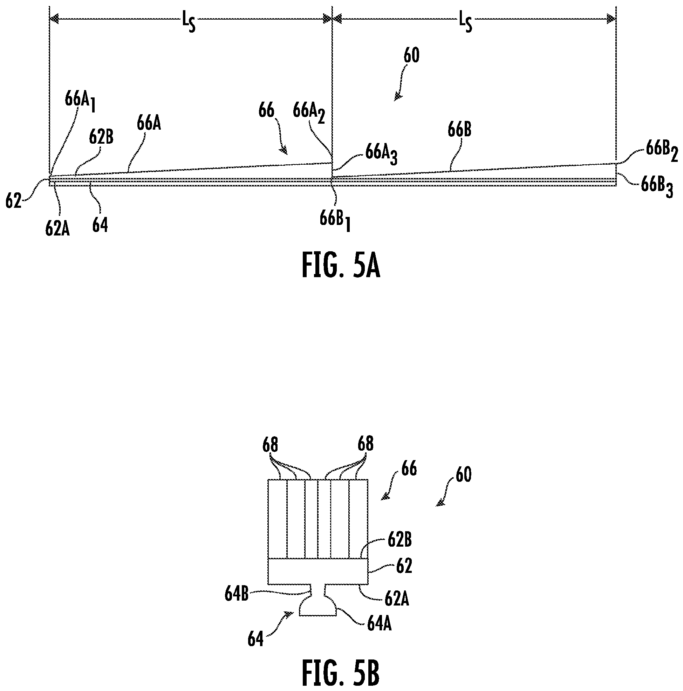

The roofing system **10** can further comprise roofing panel gaskets **60** for sealing the roofing panels as shown in Figures 5A-6C and 10-11B. The gaskets **60** can comprise stepped gaskets when using shorter roof panels that overlap or a flat gasket (discussed below). The gaskets **60** can comprise a rubber. For example, the gaskets **60** can comprise a synthetic rubber. In some embodiments, the gaskets **60** can comprise an ethylene propylene diene monomer rubber (EPDM) that can provide a seal between the gaskets **60** and the roofing panels **40** and be sturdy enough to support the roofing panels **40** between the structural beams **20** and the top caps **50** and generally be expected to last the life of the roof structure. For example, the gaskets **60** can be top gaskets **60A** or bottom gaskets **60B** depending on how the gaskets **60** are oriented and which of the gasket attachment channels **34A, 34B, 58A, 58B** the gaskets **60** engage.

Referring to Figures 5A and 5B, the roofing panel gasket **60** can comprise a longitudinal base **62** having a first side **62A** and a second side **62B** running the length of the base **62.** An engagement rail **64** can extend outward from the first side **62A** of the base **62.** The engagement rail **64** can be configured to attachably engage a respective gasket attachment channel **34A, 34B, 58A, 58B** in either a structural beam **20** or a top cap **50** of a roofing system **10.** For example, in some embodiments, the engagement rail **64** can comprise a rail track **64A** that can be inserted into a base of a gasket attachment channel **34A, 34B, 58A, 58B** and a stem **64B** that extends between the longitudinal base **62** and the rail track **64A.** The rail track **64A** can be larger in width than at least a lower portion of the stem **64B** such the rail track **64A** can slidably fit within a base of a gasket attachment channel **34A, 34B, 58A, 58B** while the lower portion of the stem **64B** can slidably fit between the respective lips **32A, 57A** of the gasket channel walls **32, 57** of the respective gasket attachment channels **34A, 34B, 58A, 58B.**

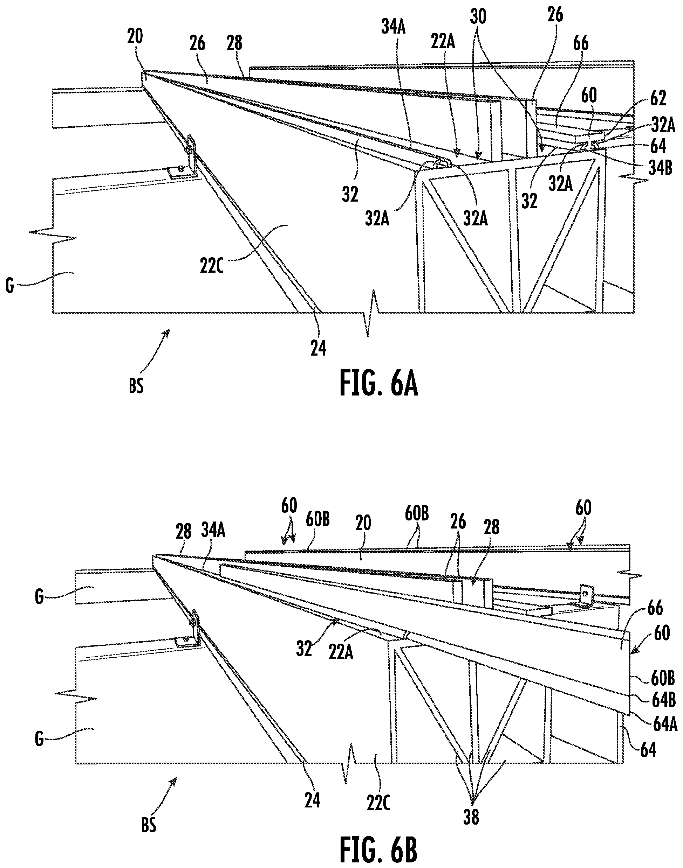

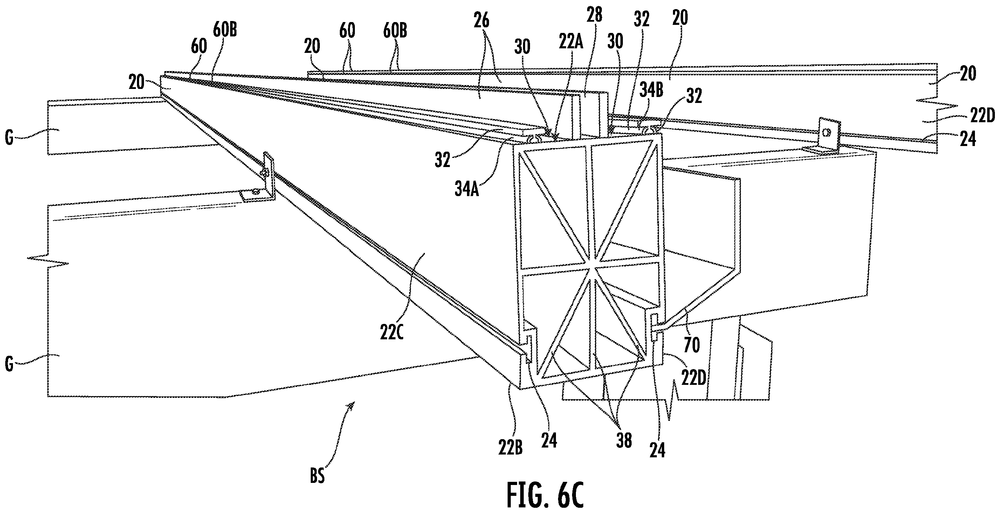

Each roofing panel gasket **60** can comprise a sealing body **66** that can extend upward from the second side **62B** of the longitudinal base **62.** The sealing body can comprise a flat surface to form a flat gasket (discussed below). Alternatively, the sealing body **66** can be a stepped longitudinal sealing body extending upward from the second side **62B** of the longitudinal base **62** as shown in Figure 5A that can be used in conjunction with a roofing system **10** where the roofing panels **40** overlap along the span length of a structural beams **20** as shown in Figures 6C-8B and 11A-11B. A sealant can be placed between the overlapping roofing panels **40** to seal the overlapping roofing panels not engaged by the roofing panel gaskets **60.** For example, in some embodiments, a double-sided butyl tape can be placed in between the overlap roofing panels **40.**

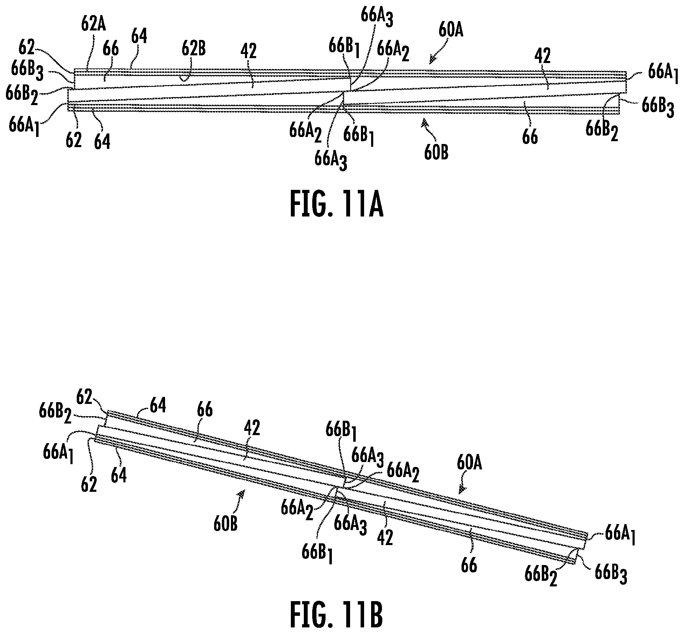

Referring back to Figures 5A and 11A-11B, the stepped longitudinal sealing body **66** can comprise a first step section **66A** extending longitudinally at an angle from the second side **62B** of the longitudinal base **62** such that a first end **66A₁** of the first step section **66A** is shorter in height than a second end **66A₂** of the first step section **66A.** The stepped longitudinal sealing body **66** can also comprise a second step section **66B** following the first step section **66A.** The second step section **66B** can also extend longitudinally at an angle from the second side **62B** of the longitudinal base **62** such that a first end **66B₁** of the second step section **66B** is shorter in height than a second end **66B₂** of the second step section **66B.** Each of the first and second step sections **66A, 66B** can have a longitudinal length **Lₛ**, or wedge length, that is long enough to support and seal along a width of a roofing panel **40** while allowing an overlap of a roofing panel **40** placed on the first step section **66A** with a roofing panel **40** placed on the second step section **66B.** As an example, the lengths **Lₛ** of the first and second step sections **66A, 66B** can be between about 38 inches and about 96 inches depending on the size of the roofing panels. In some embodiments, the lengths **Lₛ** of the first and second step sections **66A, 66B** can be between about 40 inches and about 75 inches depending on the size of the roofing panels. For example, in some embodiments, the lengths **Lₛ** of the first and second step sections **66A, 66B** can be about 40 inches. In some embodiments, the lengths **Lₛ** of the first and second step sections **66A, 66B** can be about 65 inches. In some embodiments, lengths **Lₛ** of the first and second step sections **66A, 66B** can be about 75 inches.

The second end **66A₁** of the first step section **66A** can terminate to form an abutment wall **66A₃** that extends downward toward the second side **62B** of the longitudinal base **62** to the first end **66B₁** of the second step section **66B** with the abutment wall **66A₃** having a depth corresponding to a height of a roofing panel **40** to be placed on the second step section **66B**. Depending on the size of the building structure **BS** and span length of a structural beams **20** used in the roofing system **10,** multiple roofing panel gaskets **60** may be secured in each of the gasket attachment channel **34A, 34B, 58A, 58B.** In such instances, the second end **66B₁** of the second step section **66B** can operate in a similar manner to the second end **66A₁** of the first step section **66A.** For example, when installed, the second end **66B₁** of the second step section **66B** can terminate to form an abutment wall **66B₃** that extends downward toward the second side **62B** of the longitudinal base **62.** This abutment wall **66B₃** can be adjacent to a first end **66A₁** of a first step section **66A** of an adjacent preceding roofing panel gasket **60** such that the abutment wall **66B₃** of the second step section **66B** has a depth corresponding to a height of a roofing panel **40** to be placed on the first step section **66A** of the adjacent preceding roofing panel gasket **60.** The depth of the abutment walls **66A₃**, **66B₃** when installed can vary depending on the height of the roofing panels **40** being used. For example, for frameless solar modules, the depth of the abutment walls **66A₃**, **66B₃** when installed can be about 0.25 inches. For framed roofing panels (solar modules or insulated roofing panels), the depth of the abutment walls **66A₃**, **66B₃** when installed can vary. For example, the depth of the abutment walls **66A₃**, **66B₃** when installed can be between about 34 mm and about 42 mm depending on the height of the framed roofing panels. In some embodiments, the depth of the abutment walls **66A₃**, **66B₃** when installed can be between about 32 mm and about 44 mm depending on the height of the framed roofing panels. For example, in some embodiments, the depth of the abutment walls **66A₃**, **66B₃** when installed can be about 34 mm. In some embodiments, the depth of the abutment walls **66A₃**, **66B₃** when installed can be about 37 mm. In some embodiments, the depth of the abutment walls **66A₃**, **66B₃** when installed can be about 40 mm. In some embodiments, the depth of the abutment walls **66A₃**, **66B₃** when installed can be about 42 mm.

In some embodiments, the roofing panel gasket **60** can have more than two step sections. For example, in some embodiments, the roofing panel gasket **60** can have three step sections or four step sections or more depending on the application.

As shown in Figure 5B, in some embodiments, the stepped longitudinal sealing body **66** can comprise vertical sealing layers **68.** The vertical layers **68** can each have the stepped longitudinal profile of the sealing body **66.** The vertical layers **68** can create a better and longer lasting seal between roofing panel gasket **60** and the roofing panels **40.**

The roofing system **10** comprises end fins **16, 18** attachable to the structural beams **20** and the top caps **50** to enclose end edges **12, 14** of the roofing system **10** as shown in Figures 1B and 10. The end fins **16, 18** overlap to form a seal at the end edges **12, 14.** In some embodiments, the end fins **16, 18** can comprise a metal. In some embodiments, the end fins **16, 18** can comprise a plastic. For example, in some embodiments, the end fins **16, 18** can comprise a hard plastic or metal that can provide a seal at end edges **12, 14** of the roofing system **10** and be sturdy enough to generally be expected to last the life of the roofing system **10.**

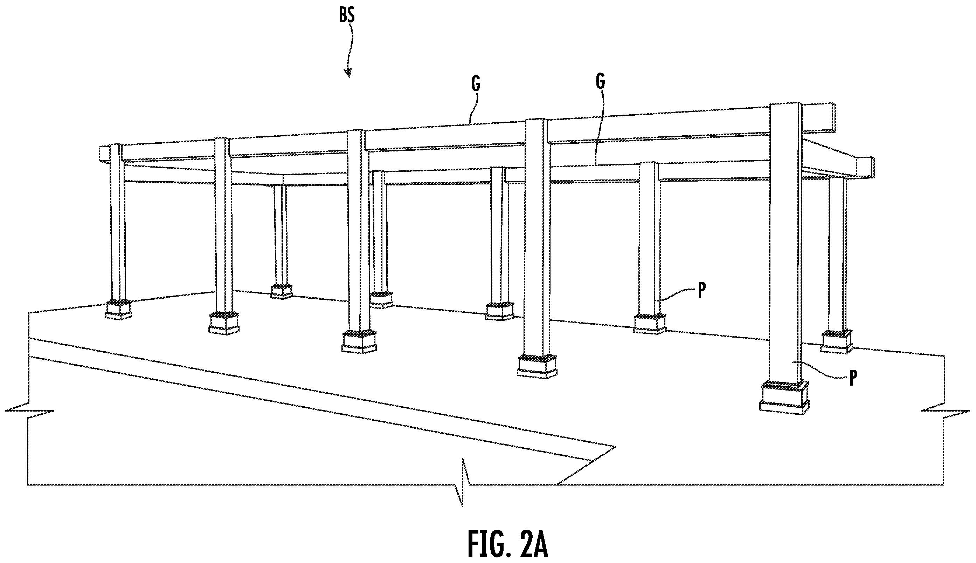

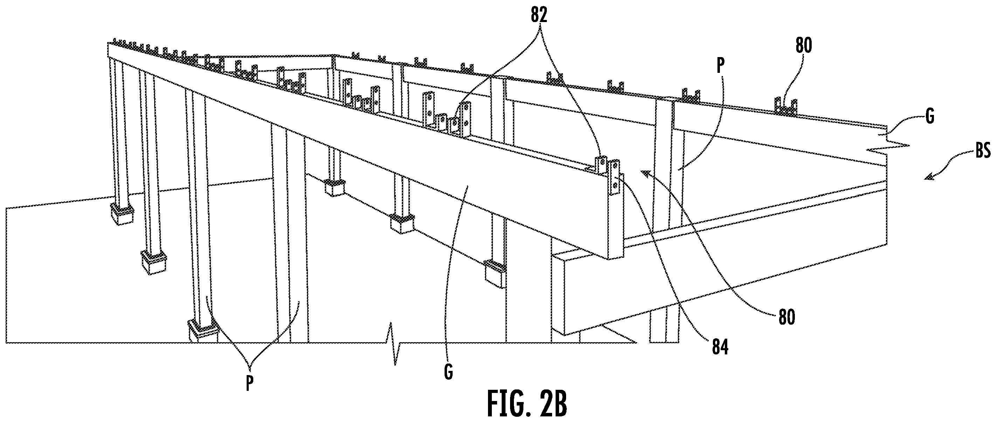

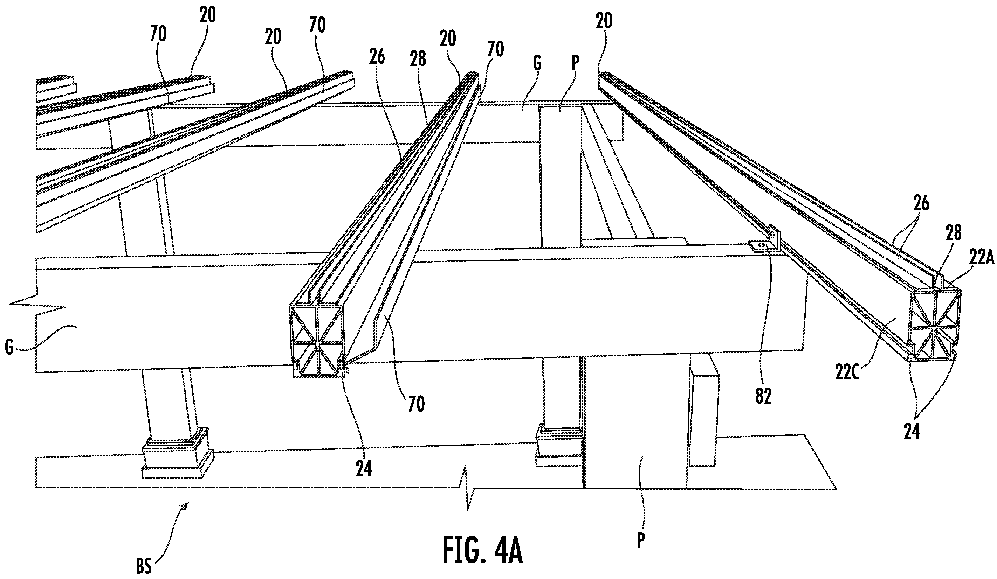

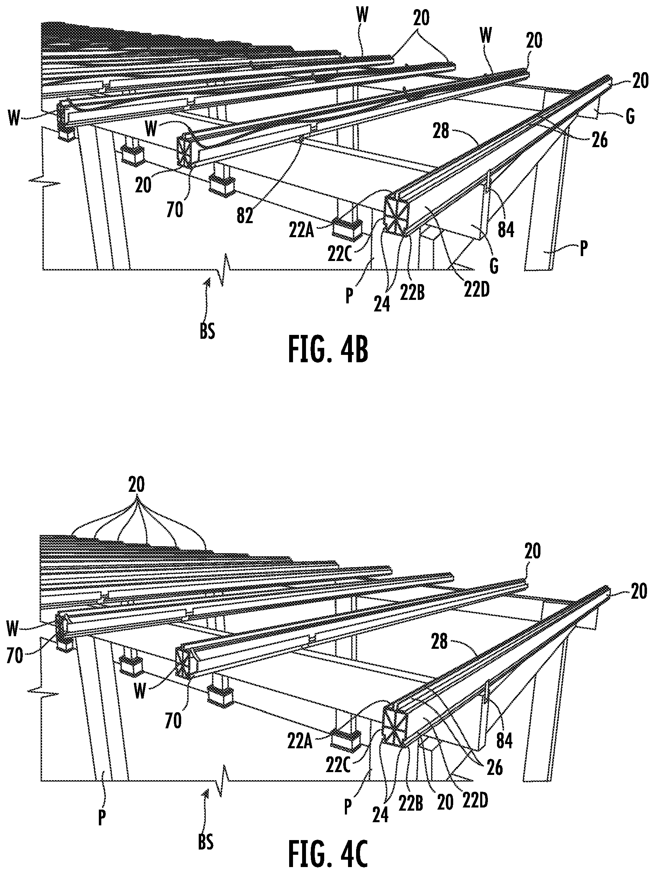

An example method for installing a roofing system **10** according to the present disclosure is provided as well in reference to Figures 2A-12B. As shown in Figure 2A, a building structure **BS** to which the roofing system **10** is to be secured can be provided. As stated above, the building structure can be any type of building structure and the roofing system **10** can be used to provide a portion of or all of the roofing structure for a respective building structure. The example building structure **BS** can comprise support post **P** that support offset but parallel girders **G.** As shown in Figure 2B-3D, mounting brackets **80** can be provided for securing structural beams **20** of the roofing system **10** as described above to the girders **G.** The mounting brackets **80** can comprise L-brackets **82** for securing the structural beams **20** on a top portion of the girders **G** and straight end brackets **84** that can be secured to the outer structural beams **20** at ends of the girders **G.** Securement T-bolts **86** can be slid into the T-bolt slots **24** in the side walls **22C, 22D** of structural beam **20.** Similarly, for embodiments of the roofing system **10** that use at least some solar modules **42** as roofing panels **40,** wire troughs **70** can also be inserted in a T-bolt slot **24** in one of the side walls **22C, 22D** of structural beam **20** which corresponds to the side on which the wiring, optimizers, and/or microinverters for the solar modules **42** to be installed in the roofing system **10** will reside as shown in Figure 4A and 4B. A bonding rail **78** may also be present on the same side wall **22C, 22D** of structural beam **20** to which the wire troughs **70** are attached. The T-bolts **86** and wire troughs **70** are proper placed within the T-bolt slots **24** in the side walls **22C, 22D** of structural beams **20,** the mounting brackets **80** can be secured to both the girders **G** and the structural beams **20.** Wiring **W** for the connection of the solar modules **42** can also be installed in the wire troughs **70** as shown in Figures 4B and 4C.

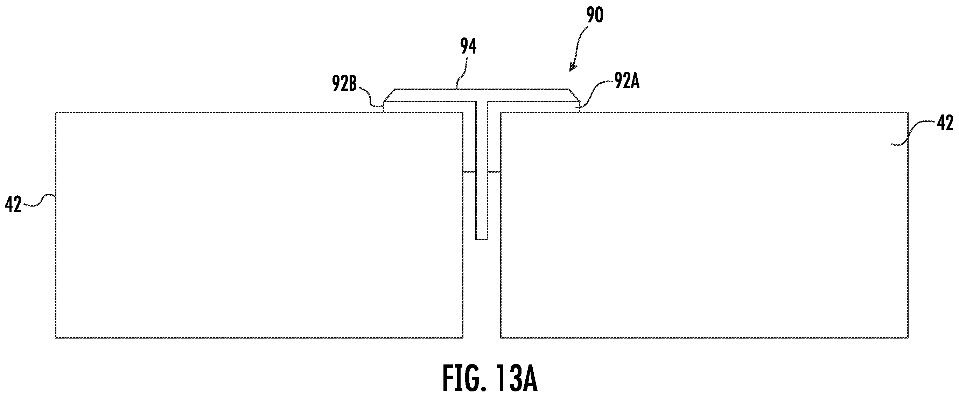

In some embodiments as shown in Figures 13A-13C, the roofing panels, such as solar modules or insulated roofing panels, can be secured side-by-side instead of stepped. For example, Figure 13A shows two solar modules **42** can be placed on a gasket in a structural beam beside each other in close proximity. A panel seal **90** can be secured between the two solar modules **42** sealing the two solar modules **42** together. The panel seal **90** can comprise a sealer **92A, 92B,** such commercial/roofing seam tape or a double-sided butyl tape, and a T-seal **94** that comprises a lateral top that extends over an end portion of the of the top of the two solar modules **42** and a tail that extends between the adjacent ends of the two solar modules **42.** In some embodiments, the tape **92A** can be placed over the top end portion and a portion of the end of the first solar module **42** and the tape **92B** can be placed over the top end portion and a portion of the end of the second solar module **42.** The T-seal **94,** which can comprise a metal such as aluminum in the form of a T-bracket, can be press fit against the strips of tape **92A, 92B,** on the top end portions and portions of the ends of the solar modules **42** to seal the gap between the two solar modules **42.** Alternatively, the T-seal **94** can have the tape **92A, 92B,** secured beneath the top of the T-seal **94** on either side of the tail of the T-seal **94.** The solar modules **42** can be placed in a side-by-side configuration and the T-seal **94** with its tail and the tape **92A, 92B** facing downward can be press fit between the two solar modules **42** to secure the T-seal **94** to the top of the end portions and the ends of the two solar modules **42** to seal the gap between the two solar modules **42.** While the use of the panel seal **90** where roofing panels are placed side-by-side have been described with reference to solar modules **42,** the panel seals **90** can be used with insulated roofing panels or a combination of different roofing panels. The tape **92A, 92B** can be positioned on the T-seal **94** in such a way so as to limit the exposure of the tape to the elements once solar modules **42** or roofing panels and panel seal **90** are installed.

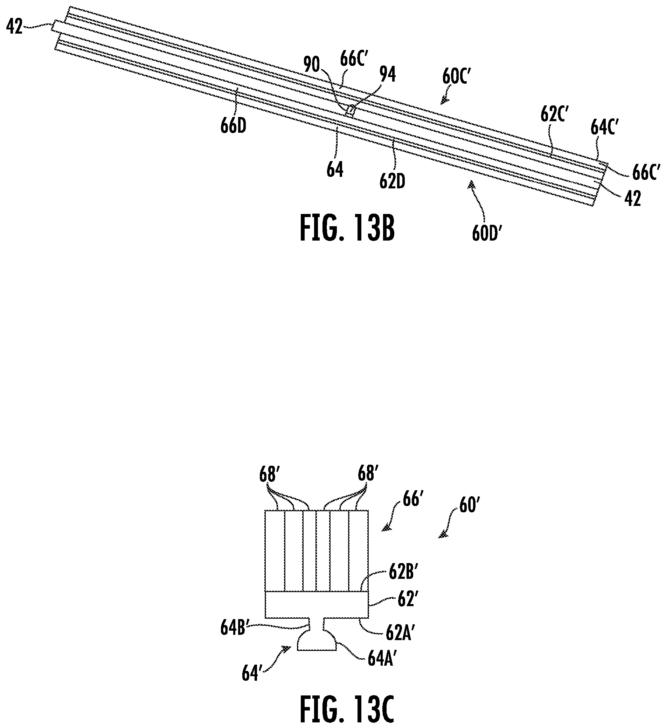

As shown in Figure 13B, gaskets **60C'** and **60D'** used in sealing the sides of the roofing system where the roofing panels 40 engage the structural beams can comprise a different shape from the stepped gaskets shown in Figures 5A,11A and 11B. The top roofing panel gasket **60C'** and the bottom roofing panel gasket **60D'** can be the same or similar in shape, length, and thickness and can be described with reference to gasket **60'** shown in side profile in Figure 13C. The gasket **60'** can comprise a longitudinal base **62'** having a first side **62A'** and a second side **62B'** running the length of the base **62'.** An engagement rail **64'** can extend outward from the first side **62A'** of the base **62'.** The engagement rail **64'** can be configured to attachably engage a respective gasket attachment channel **34A, 34B, 58A, 58B** in either a structural beam **20** or a top cap **50** of a roofing system **10.** For example, in some embodiments, the engagement rail **64'** can comprise a rail track **64A'** that can be inserted into a base of a gasket attachment channel **34A, 34B, 58A, 58B** and a stem **64B** that extends between the longitudinal base **62'** and the rail track **64A'.** The rail track **64A'** can be larger in width than at least a lower portion of the stem **64B'** such the rail track **64A'** can slidably fit within a base of a gasket attachment channel **34A, 34B, 58A, 58B** while the lower portion of the stem **64B'** can slidably fit between the respective lips **32A, 57A** of the gasket channel walls **32, 57** of the respective gasket attachment channels **34A, 34B, 58A, 58B.**

Each roofing panel gasket **60'** can also comprise a sealing body **66'** that can extend upward from the second side **62B'** of the longitudinal base **62'.** The sealing body **66'** can comprise a flat surface to form a flat gasket as shown Figure 13B (see top and bottom gaskets **60C', 60D'**). As shown in Figure 5B, in some embodiments, the sealing body **66'** can comprise vertical sealing layers **68'.** The vertical layers **68'** can each have the stepped longitudinal profile of the sealing body **66'.** The vertical layers **68'** can create a better and longer lasting seal between roofing panel gasket **60'** and the roofing panels **40'.** In some embodiments, the sealing body **66'** may not employ such vertical sealing layers **68'.**

The bottom flat gaskets **60D',** for example, as shown in Figure 13B, can form the bottom seal against the roofing panels such as solar modules **42** and can be slid into the gasket attachment channels **34A, 34B** of the top wall **22A** of the structural beam **20** similarly to the gaskets being slid into the gasket attachment channels as shown in Figures 6A-6C. As stated above, the bottom gaskets **60D'** are positioned along the span of the length of the respective structural beams **20** to received roofing panels **40** such as solar modules **42,** for example, by inserting engagement rail **64D'** of the respective bottom flat gaskets **60D'** in the gasket channel of the respective structural beam with the flat sealing body **66D'** extending from the base **62D'** and facing outward to engage the solar modules **42** as shown in Figure 13B. The top flat gaskets **60C'** can form the top seal against the roofing panels such as solar modules **42.** The top caps **50** may also be prepared by inserting engagement rail **64C'** of top gaskets **60C'** into the gasket attachment channels **58A, 58B** of the top caps **50** so that the flat sealing body **66D'** extending from the base **62D'** face outward in preparation of attachment of the top caps **50** to the structural beams **20** over the roofing panels, such as solar modules **42.** Since the top and bottom gaskets **60C', 60D'** are flat, the roofing panels such as solar modules **42** can be positioned side-by-side with a panel seal **90,** such a T-seal **94,** secured between solar modules **42** and overlapping top and portions of the side-by side solar modules **42.**

The solar modules **42** that can comprise the roofing panels **40** of a building structure can be positioned on one or more bottom flat gaskets **60D'** as shown in Figure 13B. The wiring and optimizers and/or microinverters can be attached to the solar modules **42** to permit the solar modules **42** to operate properly once the system is activated as described above. A panel seal **90,** such a T-seal **94,** can be secured between solar modules **42** and overlapping top and portions of the side-by side solar modules **42.** Top caps, as described above with reference to top caps **50,** with one or more top flat gaskets **60C'** as shown in Figure 13B installed thereon can then be placed over the solar modules **42** and secured to the structural beam as described above with the solar modules **42** sandwiched between the top flat gasket **60C'** and the bottom flat gasket **60D'** as shown in Figure 13B. Fasteners can be used to secure the top caps to the structural beams as described above.

Thus, a simple and easy construction of a roof can be accomplished using the roofing system **10** that is assembled using a limited number of steps. When solar panels are used, the roofing system **10** can also provide an integrated solar rack system to eliminate a separate rack that is attached to the top of the roof structure. The roofing system **10** can be provided in kit form or in a partial prefab form to allow for quick and easy assembly.

Although not the primary anticipated use, a smaller, modified version of the beam can be used for solar module mounting systems for traditional rooftop or ground mount-based systems. In this case the beam is run horizontally and attached to a top of an existing roof using traditional solar mounting brackets, instead of being integrated into a roofing structure. Instead of being integrated into a roofing structure, the rack sits above the existing roof and is bolted in or sits on a traditional ground mount structure. The solar modules are sandwiched between the beam and the top cap without a gasket for framed modules and with a gasket for frameless modules. The design eliminates one rail for each row beyond the first row of modules by supporting the edges of the solar module so a single rail can support two modules where they meet and also incorporates a unique wire management system.

Thus, a plurality of method of making and using the roofing systems and roofing components disclosed herein are provided as described above. For example, an embodiment of a method of forming a roofing system can be provided. The method can comprise providing a plurality of structural beams with each of the structural beams comprising an extruded aluminum structural beam and roofing panels comprising at least one of an insulated roofing panel or a solar module. The method can also comprise providing a plurality of top caps corresponding to the number of the structural beams, the top caps configured to secure the roofing panels in place on the structural beams and providing gaskets for sealing the roofing panels. The method can further comprise securing the plurality of structural beams to a base structure and securing gaskets to the structural beams and to the top caps. The roofing panels can be positioned on the gaskets secured to the structural beams. The top caps can be placed in alignment with respective structural beams such that the gaskets secured to the top caps engage the roofing panels. The method can additionally comprise securing the top caps to the respective structural beams such that the gaskets secured to the structural beams and the gaskets secured to the top caps sealably engage the roofing panels. One or more interior gutters built into each of the structural beams to drain any water that leaks between the gaskets and the roofing panels.

In some embodiments, the method can also comprise attaching end fins to at least one of the structural beams or the top caps to enclose end edges of the roofing system. In some embodiments, the method can also comprise attaching one or more wire troughs to a side of a structural beam of the plurality of structural beams, each of the one or more wire troughs being configured to accommodate wiring for solar modules used as roofing panels.

In some embodiments, the step of securing the top caps can comprise securing a top cap of the one or more top caps to a respective structural beam of the plurality of structural beams via a threaded channel on a top portion of the respective structural beam. In some such embodiments, the threaded channel on the top portion of the respective structural beam can be formed as an integral part of the respective structural beam during the extrusion process. In some such embodiments of the method, the step of securing gaskets to the structural beams comprises sliding bottom gaskets into gasket attachment channels on the respective structural beam. In some such embodiments, the method can further comprise using at least one of the gasket attachment channels for securing an end fin to the respective structural beam. Additionally, in some such embodiments, the method can comprise forming side walls of the one or more interior gutters with channel walls of the thread channel and one or more gasket attachment channels on each of the structural beams. As stated above, the disclosure above teaches other steps that can be included in such methods.

These and other modifications and variations to the present subject matter may be practiced by those of ordinary skill in the art, without departing from the scope of the present subject matter, which is defined by the appended claims. Furthermore, those of ordinary skill in the art will appreciate that the foregoing description is by way of example only, and is not intended to limit the present subject matter.

## Claims

1. A roofing system (10) comprising:
a plurality of structural beams (20), each of the structural beams (20) comprising an extruded aluminum structural beam (20);
roofing panels (40) comprising at least one of an insulated roofing panel or a solar module;
a plurality of top caps (50) corresponding to the number of the structural beams (20), the top caps (50) configured to secure the roofing panels (40) in place on the structural beams (20), the top caps (50) extending along lengths of the structural beams (20);
gaskets (60) for sealing the roofing panels (40);
end fins (16, 18) attachable to at least one of the structural beams (20) and the top caps (50) to enclose end edges of the roofing system (10), and
one or more interior gutters (30) built into each of the structural beams (20) to drain any water that leaks between the gaskets (60) and the roofing panels (40), **characterized in that** the end fins (16, 18) extend along and above a side of a length of the respective structural beam (20) and underneath a side of a length of the respective top cap (50) such that one of the end fins extends upward from the respective structural beam (20) and overlaps another of the end fins that extends downward from the top cap (50).

2. The roofing system (10) according to claim 1, further comprising one or more wire troughs (70) configured to accommodate wiring for solar modules used as roofing panels (40), each of the one or more wire troughs (70) being attachable to a side of a structural beam (20) of the plurality of structural beams (20).

3. The roofing system (10) according to claim 2, wherein each of the structural beams (20) comprises one or more T-bolt slots (24), the T-bolt slots (24) being usable for attaching a wire trough (70) of the one or more wire troughs (70) and for securing bolts to the respective structural beam (20) for securement of structural attachment brackets for securing the respective structural beam (20) to a building structure being roofed.

4. The roofing system (10) according to claim 3, wherein each of the one or more T-bolt slots (24) in each of the structural beams (20) is formed in the respective structural beam during extrusion of the respective structural beam (20).

5. The roofing system (10) according to claim 1, wherein each of the structural beams (20) comprises a threaded channel (28) that extend the length of each of the structural beams (20) on a top portion of the respective structural beam (20) for securing a top cap (50) of the plurality of top caps (50) to the respective structural beam (20) and wherein each of the structural beams (20) comprises one or more gasket attachment channels 34A, 34B for securing bottom gaskets (60) of the gaskets (60) for forming a seal between the roofing panels (40) to the respective structural beam (20).

6. The roofing system (10) according to claim 5, wherein each of the one or more gasket attachment channels 34A, 34B is usable for securing one of the end fins (16, 18) to the respective structural beam (20).

7. The roofing system (10) according to claim 5, wherein channel walls of the threaded channel and one or more gasket attachment channels 34A, 34B on each of the structural beams (20) forms side walls of the one or more interior gutters.

8. The roofing system (10) according to claim 5, wherein each of the one or more gasket attachment channels 34A, 34B of the respective structural beam (20) is formed as an integral part of the respective structural beam (20) during the extrusion process.

9. The roofing system (10) according to claim 5, wherein each of the top caps (50) comprises one or more gasket attachment channels 34A, 34B for securing top gaskets (60) of the gaskets (60) for forming a seal between the roofing panels (40) and the respective top cap (50).

10. The roofing system (10) according to claim 9, wherein each of the one or more gasket attachment channels 34A, 34B is usable for securing one of the end fins (16, 18) to the respective top cap (50).

11. The roofing system (10) according to claim 9, wherein each of the top cap is formed by extruded aluminum and each of the one or more gasket attachment channels 34A, 34B of the respective top cap is formed as an integral part of the respective top cap (50) during the extrusion process.

12. The roofing system (10) according to claim 1, wherein the gaskets (60) for sealing the roofing panels (40) are flat gaskets (60) to accommodate side-by-side the roofing panels (40).

13. The roofing system (10) according to claim 1, wherein each of the structural beams (20) comprises a bonding rail (78) extending outward from one of the side walls of the extruded beam above a T-bolt slot and the bonding rail (78) is formed as an integral part of the respective structural beam (20) during the extrusion process on a side wall of the respective structural beam (20) on which a wire trough (70) is to be attached.

14. The roofing system (10) according to claim 5, wherein each top cap (50) comprises a top portion (52) that includes a first flange (52A) extending in a first direction and a second flange (52B) extending in an opposing second direction with a securement indention (52C) between the first and second flanges (52A, 52B) for receiving a fastener therein to engage the threaded channel (28) of the structural beam (20) and a securement positioning channel (54) that extends from a bottom portion of the top cap (50) and have securement channel walls (54A, 54B) that extend from the bottom portion of the top cap (50) to form the securement positioning channel (54).

15. The roofing system (10) according to claim 14, wherein the securement channel walls (54A, 54B) are separated by a distance such that the securement positioning channel has an inner width as measured from the inner surfaces of the securement channel walls (54A, 54B) that is slight wider than an outer width of the threaded channel (28) as measured from the outer surfaces of the channel walls of the threaded channel (28), so that when the top cap (50) is placed on the structural beam (20) to be secured thereto, the securement positioning channel of the top cap (50) is placed over the threaded channel (28) of the structural beam (20) such that channel walls of the threaded channel (28) fit within the securement channel walls (54A, 54B) to align the securement indention with the threaded channel for inserting one or more fasteners.

## Patentansprüche

1. Dachsystem (10), umfassend:
eine Vielzahl von Tragbalken (20), wobei jeder Tragbalken (20) einen extrudierten Aluminium-Tragbalken (20) umfasst;
Dachpaneele (40), die mindestens eines von einem isolierten Dachpaneel oder einem Solarmodul umfassen;
eine Vielzahl von Deckkappen (50), die der Anzahl der Tragbalken (20) entsprechen, wobei die Deckkappen (50) so konfiguriert sind, dass sie die Dachpaneele (40) auf den Tragbalken (20) befestigen, wobei sich die Deckkappen (50) entlang von Längen der Tragbalken (20) erstrecken;
Dichtungen (60) zum Abdichten der Dachpaneele (40);
Abschlusslamellen (16, 18), die an mindestens einem der Tragbalken (20) und den Deckkappen (50) angebracht werden können, um Abschlusskanten des Dachsystems (10) zu umschließen,
und
eine oder mehrere Innenrinnen (30), die in jeden der Tragbalken (20) eingebaut sind, um jegliches Wasser abzuleiten, das zwischen den Dichtungen (60) und den Dachpaneelen (40) durchtritt, **dadurch gekennzeichnet, dass** sich die Abschlusslamellen (16, 18) entlang und oberhalb einer Seite einer Länge des jeweiligen Tragbalkens (20) und unterhalb einer Seite einer Länge der jeweiligen Deckkappe (50) erstrecken, sodass sich eine der Abschlusslamellen vom jeweiligen Tragbalken (20) nach oben erstreckt und eine andere der Abschlusslamellen überlappt, die sich von der Deckkappe (50) nach unten erstreckt.

2. Dachsystem (10) nach Anspruch 1, ferner umfassend eine oder mehrere Kabeldurchlässe (70), die so konfiguriert ist, dass sie eine Verkabelung von als Dachpaneele (40) verwendeten Solarmodulen aufnehmen, wobei jeder der Kabeldurchlässe (70) an einer Seite eines Tragbalkens (20) der Vielzahl von Tragbalken (20) angebracht werden kann.

3. Dachsystem (10) nach Anspruch 2, wobei jeder der Tragbalken (20) einen oder mehrere T-Bolzenschlitze (24) umfasst, wobei die T-Bolzenschlitze (24) zum Anbringen eines Kabeldurchlasses (70) des einen oder der mehreren Kabeldurchlässe (70) und zum Befestigen von Bolzen an dem jeweiligen Tragbalken (20) zur Befestigung von Traganbringungshalterungen zum Befestigen des jeweiligen Tragbalkens (20) an einer zu überdachenden Gebäudestruktur verwendet werden können.

4. Dachsystem (10) nach Anspruch 3, wobei jeder des einen oder der mehreren T-Bolzenschlitze (24) in jedem der Tragbalken (20) während einer Extrusion des jeweiligen Tragbalkens (20) im jeweiligen Tragbalken gebildet wird.

5. Dachsystem (10) nach Anspruch 1, wobei jeder der Tragbalken (20) einen Gewindekanal (28) umfasst, der sich über die Länge jedes der Tragbalken (20) auf einem Deckabschnitt des jeweiligen Tragbalkens (20) erstreckt, um eine Deckkappe (50) der Vielzahl von Deckkappen (50) an dem jeweiligen Tragbalken (20) zu befestigen, und wobei jeder der Tragbalken (20) einen oder mehrere Dichtungsanbringungskanäle 34A, 34B zum Befestigen unterer Dichtungen (60) der Dichtungen (60) umfasst, um eine Abdichtung zwischen den Dachpaneelen (40) und dem jeweiligen Tragbalken (20) zu bilden.

6. Dachsystem (10) nach Anspruch 5, wobei jeder des einen oder der mehreren Dichtungsanbringungskanäle 34A, 34B verwendet werden kann, um eine der Abschlusslamellen (16, 18) an dem jeweiligen Tragbalken (20) zu befestigen.

7. Dachsystem (10) nach Anspruch 5, wobei Kanalwände des Gewindekanals und ein oder mehrere Dichtungsanbringungskanäle 34A, 34B an jedem der Tragbalken (20) Seitenwände der einen oder mehreren Innenrinnen bilden.

8. Dachsystem (10) nach Anspruch 5, wobei jeder des einen oder der mehreren Dichtungsanbringungskanäle 34A, 34B des jeweiligen Tragbalkens (20) während des Extrusionsprozesses als ein integraler Bestandteil des jeweiligen Tragbalkens (20) gebildet ist.

9. Dachsystem (10) nach Anspruch 5, wobei jede der Deckkappen (50) einen oder mehrere Dichtungsanbringungskanäle 34A, 34B zum Befestigen oberer Dichtungen (60) der Dichtungen (60) umfasst, um eine Abdichtung zwischen den Dachpaneelen (40) und der jeweiligen Deckkappe (50) zu bilden.

10. Dachsystem (10) nach Anspruch 9, wobei jeder des einen oder der mehreren Dichtungsanbringungskanäle 34A, 34B verwendet werden kann, um eine der Abschlusslamellen (16, 18) an der jeweiligen Deckkappe (50) zu befestigen.

11. Dachsystem (10) nach Anspruch 9, wobei jede Deckkappe aus extrudiertem Aluminium gebildet ist und jeder des einen oder der mehreren Dichtungsanbringungskanäle 34A, 34B der jeweiligen Deckkappe während des Extrusionsprozesses als ein integraler Bestandteil der jeweiligen Deckkappe (50) gebildet ist.

12. Dachsystem (10) nach Anspruch 1, wobei die Dichtungen (60) zum Abdichten der Dachpaneele (40) flache Dichtungen (60) sind, um die nebeneinander liegenden Dachpaneele (40) aufzunehmen.

13. Dachsystem (10) nach Anspruch 1, wobei jeder der Tragbalken (20) eine Verbindungsschiene (78) umfasst, die sich von einer der Seitenwände des extrudierten Balkens oberhalb eines T-Bolzenschlitzes nach außen erstreckt und die Verbindungsschiene (78) während des Extrusionsprozesses als ein integraler Bestandteil des jeweiligen Tragbalkens (20) an einer Seitenwand des jeweiligen Tragbalkens (20) gebildet wird, an der ein Kabeldurchlass (70) angebracht werden soll.

14. Dachsystem (10) nach Anspruch 5, wobei jede Deckkappe (50) einen oberen Abschnitt (52) umfasst, der einen ersten Flansch (52A), der sich in einer ersten Richtung erstreckt, und einen zweiten Flansch (52B), der sich in einer entgegengesetzten zweiten Richtung erstreckt, beinhaltet, wobei sich zwischen dem ersten und dem zweiten Flansch (52A, 52B) eine Befestigungsvertiefung (52C) befindet, um ein Befestigungselement darin aufzunehmen, um in den Gewindekanal (28) des Tragbalkens (20) und einen Befestigungspositionierungskanal (54) einzugreifen, der sich von einem unteren Abschnitt der Deckkappe (50) erstreckt und Befestigungskanalwände (54A, 54B) aufweist, die sich von dem unteren Abschnitt der Deckkappe (50) erstrecken, um den Befestigungspositionierungskanal (54) zu bilden.

15. Dachsystem (10) nach Anspruch 14, wobei die Befestigungskanalwände (54A, 54B) um einen Abstand voneinander getrennt sind, so dass der Befestigungspositionierungskanal eine Innenbreite gemessen von den Innenoberflächen der Befestigungskanalwänden (54A, 54B) aufweist, die knapp weiter als eine Außenbreite des Gewindekanals (28) gemessen von den Außenoberflächen der Kanalwände des Gewindekanals (28) ist, sodass, wenn eine Deckkappe (50) auf dem Tragbalken (20) platziert wird, um daran befestigt zu werden, der Befestigungspositionierungskanal der Deckkappe (50) über dem Gewindekanal (28) des Tragbalkens (20) platziert wird, sodass Kanalwände des Gewindekanals (28) in die Befestigungskanalwände (54A, 54B) passen, um die Befestigungsvertiefung mit dem Gewindekanal zum Einsetzen eines oder mehrerer Befestigungselemente auszurichten.

## Revendications

1. Système de toiture (10) comprenant :
une pluralité de poutres structurelles (20), chacune des poutres structurelles (20) comprenant une poutre structurelle en aluminium extrudé (20) ;
des panneaux de toiture (40) comprenant au moins un parmi un panneau de toiture isolé ou un module solaire ;
une pluralité de capuchons supérieurs (50) correspondant au nombre de poutres structurelles (20), les capuchons supérieurs (50) étant configurés pour fixer les panneaux de toiture (40) en place sur les poutres structurelles (20), les capuchons supérieurs (50) s'étendant sur des longueurs des poutres structurelles (20) ;
des joints (60) pour sceller les panneaux de toiture (40) ;
des ailettes d'extrémité (16, 18) pouvant être raccordées à au moins un parmi les poutres structurelles (20) et les capuchons supérieurs (50) pour renfermer des bords d'extrémité du système de toiture (10),
et
une ou plusieurs gouttières intérieures (30) intégrées à chacune des poutres structurelles (20) pour évacuer toute eau qui s'infiltre entre les joints (60) et les panneaux de toiture (40), **caractérisé en ce que** les ailettes d'extrémité (16, 18) s'étendent le long et au-dessus d'un côté d'une longueur de la poutre structurelle (20) respective et sous un côté d'une longueur du capuchon supérieur (50) respectif de sorte que l'une des ailettes d'extrémité s'étende vers le haut à partir de la poutre structurelle (20) respective et chevauche une autre des ailettes d'extrémité qui s'étend vers le bas à partir du capuchon supérieur (50).

2. Système de toiture (10) selon la revendication 1, comprenant en outre une ou plusieurs goulottes de câbles (70) configurées pour accueillir le câblage des modules solaires utilisés comme panneaux de toiture (40), chacune des une ou plusieurs goulottes de câbles (70) pouvant être raccordée à un côté d'une poutre structurelle (20) de la pluralité de poutres structurelles (20).

3. Système de toiture (10) selon la revendication 2, dans lequel chacune des poutres structurelles (20) comprend une ou plusieurs fentes pour boulons en T (24), les fentes pour boulons en T (24) étant utilisables pour raccorder une goulotte de câbles (70) des une ou plusieurs goulottes de câbles (70) et pour fixer des boulons à la poutre structurelle (20) respective pour la fixation de supports de raccordement structurels pour fixer la poutre structurelle (20) respective à une structure de bâtiment qui est recouverte d'un toit.

4. Système de toiture (10) selon la revendication 3, dans lequel chacune des une ou plusieurs fentes de boulon en T (24) dans chacune des poutres structurelles (20) est formée dans la poutre structurelle respective lors de l'extrusion de la poutre structurelle (20) respective.

5. Système de toiture (10) selon la revendication 1, dans lequel chacune des poutres structurelles (20) comprend un canal fileté (28) qui s'étend sur la longueur de chacune des poutres structurelles (20) sur une partie supérieure de la poutre structurelle (20) respective pour fixer un capuchon supérieur (50) de la pluralité de capuchons supérieurs (50) à la poutre structurelle (20) respective et dans lequel chacune des poutres structurelles (20) comprend un ou plusieurs canaux de raccordement de joint (34A, 34B) pour fixer des joints inférieurs (60) des joints (60) pour former un scellement entre les panneaux de toiture (40) à la poutre structurelle (20) respective.

6. Système de toiture (10) selon la revendication 5, dans lequel chacun des un ou plusieurs canaux de raccordement de joint (34A, 34B) est utilisable pour fixer l'une des ailettes d'extrémité (16, 18) à la poutre structurelle (20) respective.

7. Système de toiture (10) selon la revendication 5, dans lequel des parois de canal du canal fileté et un ou plusieurs canaux de raccordement de joint (34A, 34B) sur chacune des poutres structurelles (20) forment des parois latérales des une ou plusieurs gouttières intérieures.

8. Système de toiture (10) selon la revendication 5, dans lequel chacun des un ou plusieurs canaux de raccordement de joint (34A, 34B) de la poutre structurelle (20) respective est formé comme partie intégrante de la poutre structurelle (20) respective au cours du processus d'extrusion.

9. Système de toiture (10) selon la revendication 5, dans lequel chacun des capuchons supérieurs (50) comprend un ou plusieurs canaux de raccordement de joint (34A, 34B) pour fixer des joints supérieurs (60) des joints (60) pour former un scellement entre les panneaux de toiture (40) et le capuchon supérieur (50) respectif.

10. Système de toiture (10) selon la revendication 9, dans lequel chacun des un ou plusieurs canaux de raccordement de joint (34A, 34B) est utilisable pour fixer l'une des ailettes d'extrémité (16, 18) au capuchon supérieur (50) respectif.

11. Système de toiture (10) selon la revendication 9, dans lequel chaque capuchon supérieur est formé d'aluminium extrudé et chacun des un ou plusieurs canaux de raccordement de joint (34A, 34B) du capuchon supérieur respectif est formé comme partie intégrante du capuchon supérieur (50) respectif pendant le processus d'extrusion.

12. Système de toiture (10) selon la revendication 1, dans lequel les joints (60) pour sceller les panneaux de toiture (40) sont des joints plats (60) pour accueillir côte à côte les panneaux de toiture (40).

13. Système de toiture (10) selon la revendication 1, dans lequel chacune des poutres structurelles (20) comprend un rail de liaison (78) s'étendant vers l'extérieur à partir de l'une des parois latérales de la poutre extrudée au-dessus d'une fente de boulon en T et le rail de liaison (78) est formé comme partie intégrante de la poutre structurelle (20) respective pendant le processus d'extrusion sur une paroi latérale de la poutre structurelle (20) respective à laquelle une goulotte de câbles (70) doit être raccordée.

14. Système de toiture (10) selon la revendication 5, dans lequel chaque capuchon supérieur (50) comprend une partie supérieure (52) qui inclut une première bride (52A) s'étendant dans une première direction et une seconde bride (52B) s'étendant dans une seconde direction opposée avec une encoche de fixation (52C) entre les première et seconde brides (52A, 52B) pour recevoir une fixation destinée à s'engager dans le canal fileté (28) de la poutre structurelle (20) et un canal de positionnement de fixation (54) qui s'étend à partir d'une partie inférieure du capuchon supérieur (50) et qui comporte des parois de canal de fixation (54A, 54B) qui s'étendent à partir de la partie inférieure du capuchon supérieur (50) pour former le canal de positionnement de fixation (54).

15. Système de toiture (10) selon la revendication 14, dans lequel les parois de canal de fixation (54A, 54B) sont séparées d'une distance telle que le canal de positionnement de fixation présente une largeur intérieure, mesurée à partir des surfaces intérieures des parois de canal de fixation (54A, 54B), légèrement supérieure à une largeur extérieure du canal fileté (28), mesurée à partir des surfaces extérieures des parois de canal du canal fileté (28), de sorte que, lorsque le capuchon supérieur (50) est placé sur la poutre structurelle (20) à laquelle il doit être fixé, le canal de positionnement de fixation du capuchon supérieur (50) soit placé sur le canal fileté (28) de la poutre structurelle (20) afin que des parois de canal du canal fileté (28) s'insèrent dans les parois de canal de fixation (54A, 54B) pour aligner l'encoche de fixation avec le canal fileté en vue d'insérer une ou plusieurs fixations.
